# FASCICULE DE BREVET EUROPEEN

(11) **EP 2 179 202 B1**
(45) Date de publication et mention de la délivrance du brevet: **15.02.2017**
(21) Numéro de dépôt: 08843555.7
(22) Date de dépôt: 08.08.2008
(51) Int. Cl.: F16J 15/02

(54) **JOINT D'ÉTANCHÉITÉ À GRANDE AMPLITUDE D'ÉCRASEMENT**
ABDICHTUNG MIT GROSSER NACHGIEBIGKEIT GEGENÜBER QUETSCHEN
SEAL HAVING A LARGE COMPRESSION RANGE

(30) Priorité: 20.08.2007 FR 0705933
(43) Date de publication de la demande: 28.04.2010
(73) Titulaire: Safran Nacelles, 76700 Gonfreville-l'Orcher (FR); JPR, 75008 Paris (FR)
(72) Inventeur: BUNEL, Serge, F-76610 Le Havre (FR)
(74) Mandataire: Delorme, Nicolas
(86) Numéro de dépôt international: PCT/FR2008/001181
(87) Numéro de publication internationale: WO 2009/056699

(56) Documents cités:
- WO-A-2004/088081
- WO-A-2004/113772
- FR-A- 2 021 149
- GB-A- 2 201 201

## Description

L'invention se rapporte à un joint d'étanchéité destiné à être interposé entre un turboréacteur et une nacelle d'un aéronef.

Un aéronef est propulsé par plusieurs turboréacteurs logés chacun dans une nacelle ; chaque nacelle abrite également un ensemble de dispositifs d'actionnement annexes liés à son fonctionnement et assurant diverses fonctions lorsque le turboréacteur est en fonctionnement ou à l'arrêt.

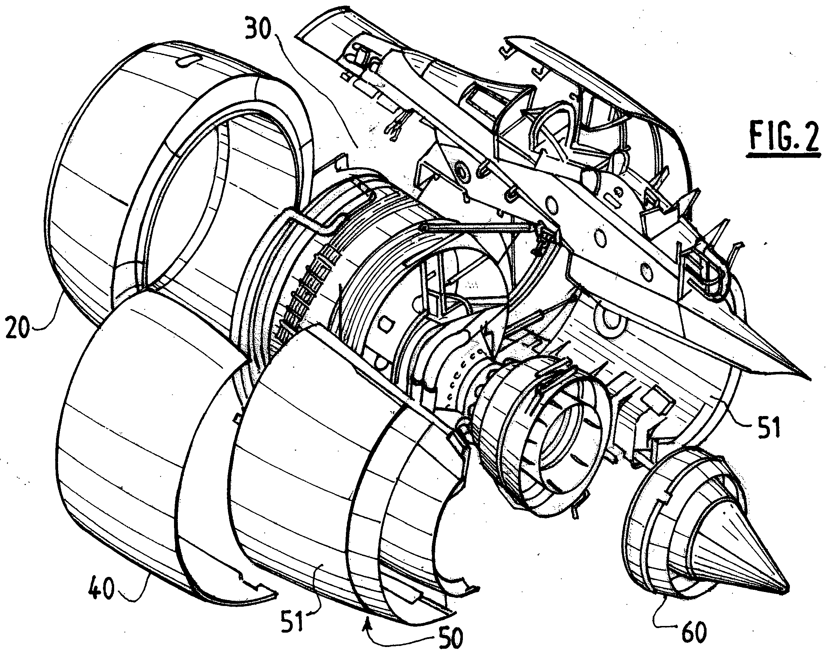

Comme le montre la Figure 2, une nacelle présente généralement une structure tubulaire comprenant :
(i) une entrée d'air 20 en avant d'un turboréacteur 30,
(ii) une section médiane 40 destinée à entourer une soufflante du turboréacteur,
(iii) une section arrière 50 pouvant éventuellement embarquer des moyens d'inversion de poussée et destinée à entourer la chambre de combustion du turboréacteur 30, et
(iv) une tuyère d'éjection 60 dont la sortie est située en aval du turboréacteur.

Les nacelles modernes sont souvent destinées à abriter un turboréacteur double flux apte à générer par l'intermédiaire des pales de la soufflante en rotation un flux d'air chaud (également appelé flux primaire) issu de la chambre de combustion du turboréacteur.

Une nacelle présente généralement une structure externe, dite Outer Fixed Structure (OFS), qui définit, avec une structure interne concentrique, dite Inner Fixed Structure (IFS), comportant un capot entourant la structure du turboréacteur proprement dite en arrière de la soufflante, un canal annulaire d'écoulement, encore appelé veine, visant à canaliser un flux d'air froid, dit secondaire, qui circule à l'extérieur du turboréacteur. Les flux primaire et secondaire sont éjectés du turboréacteur par l'arrière de la nacelle.

Chaque ensemble propulsif de l'avion est ainsi formé par une nacelle et un turboréacteur, et est suspendu à une structure fixe de l'avion, par exemple sous une aile ou sur le fuselage, par l'intermédiaire d'un pylône ou d'un mât rattaché au turboréacteur ou à la nacelle.

La section arrière de la structure externe de la nacelle est usuellement formée de deux capots de forme sensiblement hémicylindrique, de part et d'autre d'un plan vertical longitudinal de symétrie de la nacelle, et fonctionnement et une position de maintenance qui donne accès au turboréacteur.

Les deux capots sont généralement montés pivotants autour d'un axe longitudinal formant charnière en partie supérieure de l'inverseur (ligne de jonction supérieure, à 12 heures). Les capots sont maintenus en position de fermeture au moyen de verrous disposés le long d'une ligne de jonction située en partie inférieure (à 6 heures).

On constate donc qu'un ensemble propulseur d'avion intègre des sous ensembles fonctionnels qui possèdent des mouvements relatifs et entre lesquels il convient de gérer l'étanchéité.

En particulier, il importe que les deux capots qui entourent le turboréacteur et qui délimitent la veine secondaire sur une partie de son parcours canalisent cette veine secondaire sans fuite vers le turboréacteur 30. Il est particulièrement important de créer une barrière d'étanchéité entre la partie amont de chaque capot et le turboréacteur pour prévenir toute fuite de la veine secondaire vers le turboréacteur. Une telle fuite est particulièrement néfaste. En effet, la nacelle est conçue et dimensionnée pour une veine secondaire canalisée qui exerce une pression sur sa structure interne. En revanche, la nacelle n'est pas conçue pour faire face à un écopage du flux constituant la veine secondaire vers le turboréacteur 30 ; un écopage important peut conduire à un arrachement de la structure interne de la nacelle.

Cependant, l'étanchéité entre les deux capots et le turboréacteur présente une problématique particulière. Tout d'abord, les deux capots sont chacun animés de mouvements axiaux et radiaux par rapport au turboréacteur. Ensuite, compte tenu de la grande dimension des pièces, les deux capots peuvent en fonctionnement connaître des déplacements importants. Un joint interposé entre une capot et le turboréacteur doit donc créer une barrière d'étanchéité quelle que soit la position relative d'un capot par rapport au turboréacteur. Or, compte tenu du coefficient d'écrasement des joints connus et de l'amplitude du déplacement dont il convient d'assurer l'étanchéité, il s'avère que les joints connus à section transversale tubulaire généralement en oméga ne peuvent pas valablement assurer cette étanchéité ; en effet, les joints connus devraient présenter un diamètre incompatible avec l'espace délimité entre les capots et le turboréacteur.

Les documents WO 2004/088081 et WO 2004/113772 décrivent des joints comprenant une partie cylindrique depuis laquelle s'étend au moins une lèvre. Toutefois ces joints ne sont pas pleinement satisfaisants, notamment parce qu'ils n'ont pas une grande capacité d'écrasement.

La présente invention a pour but de remédier à tout ou partie des inconvénients évoqués précédemment.

Un but de la présente invention est d'améliorer l'étanchéité entre un capot d'une partie arrière d'une nacelle et d'un turboréacteur dans un ensemble propulseur d'aéronef lorsque ceux-ci sont susceptibles de connaître des déplacements relatifs de grandes amplitudes.

L'invention a essentiellement pour objet un joint d'étanchéité conçu pour être interposé entre un capot d'une section arrière d'une nacelle et un turboréacteur d'un ensemble propulseur d'un aéronef ; ce joint d'étanchéité présente une partie cylindrique et au moins une lèvre s'étendant radialement depuis une génératrice de la partie cylindrique et, de plus, intègre une nervure longitudinale orientée radialement vers l'intérieur de la partie cylindrique.

Ainsi, le joint d'étanchéité selon l'invention présente une partie cylindrique de laquelle s'étendent une ou plusieurs lèvres. Le joint formé selon l'invention peut maintenir une barrière étanche entre un capot d'une partie arrière d'une nacelle et un turboréacteur en cas de déplacements relatifs de grandes amplitudes de ces deux éléments. Le maintien de l'étanchéité est obtenu par un joint dont l'enveloppe, c'est-à-dire le volume à l'intérieur duquel le joint d'étanchéité est susceptible d'évoluer, reste limitée. Ce point est d'importance car l'espace annulaire délimité entre chaque capot et le turboréacteur est limité mais est susceptible de connaître des variations de grande amplitude au cours du fonctionnement du turboréacteur. L'action de la ou de chaque lèvre, combinée à l'élasticité de la partie cylindrique, assure le maintien d'une barrière d'étanchéité entre le capot et le turboréacteur quelle que soit l'amplitude du déplacement entre ces deux éléments. De plus, la nervure agit comme butée lors d'un écrasement complet de la partie cylindrique.

Ainsi, l'invention fournit un joint qui combine excellente étanchéité et grande capacité d'écrasement, dont la limite est assurée par la nervure.

Selon une disposition préférée de l'invention, le joint d'étanchéité présente deux lèvres sensiblement parallèles, ce qui permet de créer une double barrière d'étanchéité. Cette disposition s'avère d'importance dans la mesure où chaque capot peut connaître des déplacements axiaux et/ou radiaux par rapport au turboréacteur.

En outre, les deux lèvres sont par exemple orientées l'une par rapport à l'autre selon un V.

Pour permettre la fixation du joint sur une surface d'appui, la partie cylindrique peut intégrer un méplat sur sa surface extérieure.

De manière préférée, le méplat est diamétralement opposé à au moins l'une des lèvres. Cette configuration du joint permet de mettre à profit pleinement l'élasticité de la partie cylindrique et de chaque lèvre, qui permet ainsi de maintenir un contact avec les surfaces à étancher.

De préférence, la nervure longitudinale est adossée au méplat. Cette disposition correspond à une mise en oeuvre avantageuse du joint dans laquelle le joint est fixé sur son méplat en vue d'assurer une barrière entre deux éléments susceptibles de déplacement dans une direction perpendiculaire au méplat.

Le méplat peut être prolongé par une semelle de fixation.

De façon concrète, le joint peut être réalisé dans une matière élastique de type silicone armé de fibres de verre ou d'aramide.

Enfin, de façon tout à fait avantageuse, le joint peut posséder un ratio encombrement maximum / épaisseur de matière supérieur à 10, voire même supérieur à 15. L'encombrement maximum est défini par la distance entre l'extrémité libre de la ou des lèvres et l'extrémité opposée de la partie cylindrique (par exemple la face d'appui du méplat), l'épaisseur de matière étant l'épaisseur du joint, dans la partie cylindrique ou au niveau des lèvres. A l'inverse, de nombreux joints de l'art antérieur présentent une épaisseur de matière importante pour un encombrement maximum pouvant être du même ordre de grandeur que celui du joint selon l'invention, si bien que le ratio précité, pour les joints de l'art antérieur, est généralement de l'ordre de 5. Ainsi, l'invention fournit un joint dont le profil lui permet un très fort écrasement.

La combinaison des caractéristiques suivantes : lèvres radiales, grande capacité d'écrasement et présence d'une nervure longitudinale formant une butée d'écrasement, rend le joint selon l'invention particulièrement performant.

Pour sa bonne compréhension, l'invention est décrite en référence au dessin ci annexé représentant à titre d'exemple non limitatif une forme de réalisation d'un joint d'étanchéité selon celle-ci.
La figure 1 est une vue en coupe transversale d'une forme de réalisation d'un joint d'étanchéité selon l'invention embarqué sur un capot d'une section arrière d'une nacelle ;
La figure 2 est une vue éclatée en perspective d'un ensemble propulseur d'aéronef comprenant une nacelle et un turboréacteur ;
La figure 3 est une vue partielle en perspective d'une demi section arrière d'une nacelle, montrant les emplacements des joints selon l'invention ;
La figure 4 est une vue agrandie du détail IV de la figure 3.

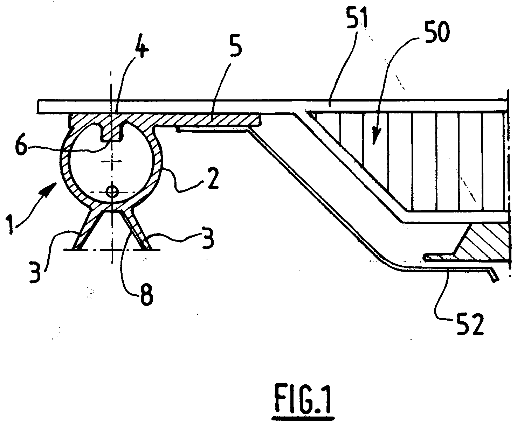

Comme on peut le voir sur la figure 1, le joint d'étanchéité 1 selon l'invention comprend essentiellement deux parties : d'une part, une partie cylindrique 2 qui, dans l'exemple représenté, présente, au repos, une section circulaire et d'autre part, deux lèvres 3 qui forment entre elles sensiblement un V. L'angle formé par les deux lèvres 3 entre elles est de l'ordre de 30°. Chacune des deux lèvres 3 s'étend sensiblement radialement depuis une génératrice de la partie cylindrique 2 vers l'extérieur de celle-ci.

Diamétralement opposé aux deux lèvres, le joint d'étanchéité 1 intègre un méplat 4 sur une surface extérieure ; dans l'exemple représenté, le méplat 4 est prolongé transversalement par une semelle plane 5.

On note également que, adossé au méplat 4, le joint d'étanchéité 1 incorpore une nervure 6 longitudinale orientée vers l'intérieur de la partie cylindrique 2.

Ce joint d'étanchéité 1 peut être, par exemple, réalisé par moulage d'une matière élastique telle que par exemple un silicone ou un élastomère armé de fibres de carbone ou de fibres d'aramide.

On peut également noter qu'un film 8 de matériau à faible coefficient de friction tel que, par exemple, du PTFE, peut être rapporté sur le joint d'étanchéité 1. Ce film 8 vient draper les faces des lèvres 3 qui sont en regard l'une de l'autre ainsi que la portion de la partie cylindrique 2 qui se situe entre les deux lèvres 3.

Comme on peut le voir sur la figure 1, le joint d'étanchéité 1 est rapporté et est collé sur une surface d'appui d'un capot 51 d'une section arrière d'une nacelle.

Pour compléter la fixation du joint d'étanchéité 1, il peut également être prévu de prendre en sandwich la semelle entre une tôle de protection au feu 52 et la surface d'appui du capot 51.

En fonctionnement, le joint d'étanchéité 1 qui est donc embarqué sur chacun des capots 51 de la section arrière de la nacelle, vient en contact du turboréacteur et, plus spécialement, vient en contact d'un carter qui entoure le compresseur du turboréacteur 30. Le joint d'étanchéité 1 est alors écrasé entre le capot sur lequel il est embarqué et le carter du turboréacteur 30.

Lors du fonctionnement du turboréacteur, chacun des deux capots 51 peut connaître des mouvements d'amplitude importante dans une direction radiale mais également dans une direction axiale par rapport au turboréacteur 30. A titre indicatif, on peut constater des déplacements entre un capot 51 et le turboréacteur 30 dont l'amplitude peut être de l'ordre de 20 mm.

Le joint d'étanchéité 1 selon l'invention permet donc de conserver en toute circonstance un contact et donc de créer une barrière étanche entre le carter du turboréacteur 30 et un capot 51 et ce même lorsque l'amplitude radiale est maximale. Le joint d'étanchéité 1 selon l'invention offre une importante capacité d'écrasement qui se traduit, dans un premier temps, par une flexion des deux lèvres 3 qui présentent une raideur relativement faible et en tout cas inférieure à celle de la partie cylindrique 2 ; dans un second temps, lorsque l'amplitude radiale s'accroît suite au mouvement du capot 51 par rapport au turboréacteur 30, la partie cylindrique 2 est susceptible de s'écraser jusqu'à venir en appui contre la nervure longitudinale 6.

En cas de mouvement relatif d'un capot 51 de la nacelle par rapport au turboréacteur 30 dans une direction axiale, le joint d'étanchéité 1 maintient l'étanchéité grâce à ses deux lèvres 3 qui sont susceptibles de suivre les mouvements du capot.

L'invention fournit ainsi un joint d'étanchéité 1 qui permet de maintenir une barrière étanche entre deux éléments qui sont susceptibles de connaître des déplacements relatifs de grande amplitude, l'enveloppe de ce joint d'étanchéité 1, c'est à dire le volume à l'intérieur duquel le joint d'étanchéité 1 est susceptible d'évoluer, reste cependant limitée. Le joint selon l'invention permet ainsi de prévenir un écopage de la veine secondaire vers le turboréacteur. Ce résultat est obtenu par une partie cylindrique 2 élastique combinée à une et de préférence deux lèvres qui assurent un contact en cas de déplacement de grandes amplitudes.

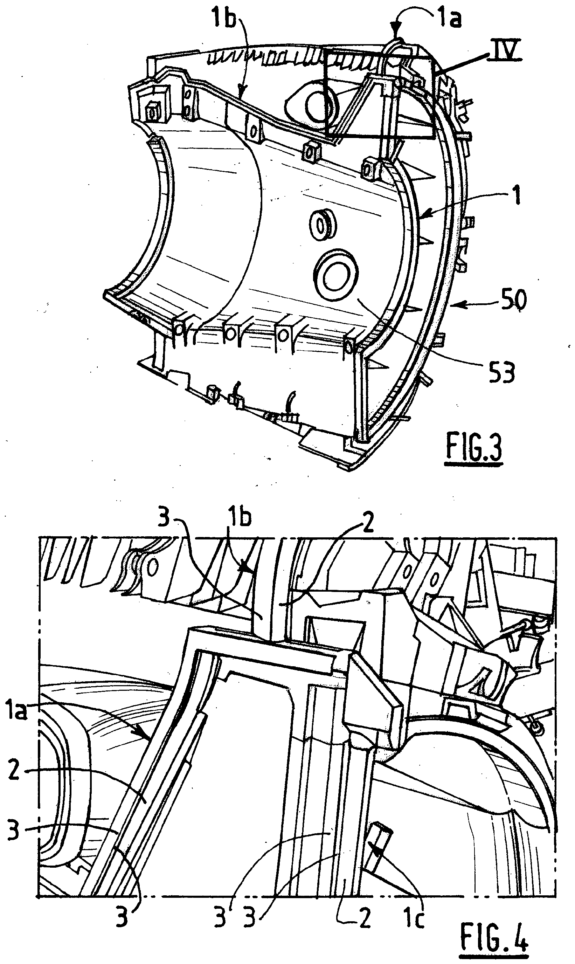

Comme illustré sur les figures 3 et 4, un joint d'étanchéité 1 selon l'invention peut être placé, sur la section arrière 50 de la nacelle :
- au niveau de la ligne de jonction supérieure (référence 1a) ;
- dans la zone de jonction avec le cadre avant de la nacelle (référence 1 b) ;
- et/ou sur l'IFS 53, à l'avant (référence 1c).

Bien entendu l'invention n'est pas limitée à la forme de réalisation décrite ci-dessus à titre d'exemple non limitatif mais elle en embrasse toutes les formes de réalisation. Ainsi, la semelle de fixation pourrait s'étendre de part et d'autre du méplat.

## Revendications

1. Joint d'étanchéité conçu pour être interposé entre un capot (51) d'une section arrière (50) d'une nacelle et un turboréacteur (30) d'un ensemble propulseur d'un aéronef, ledit joint d'étanchéité (1) présentant une partie cylindrique (2) et au moins une lèvre (3) s'étendant radialement depuis une génératrice de la partie cylindrique (2), **caractérisé en ce que** le joint d'étanchéité (1) intègre une nervure longitudinale (6) orientée radialement vers l'intérieur de la partie cylindrique (2) et **en ce qu'**il possède un ratio encombrement maximum / épaisseur de matière supérieur à 10.

2. Joint d'étanchéité selon la revendication 1, **caractérisé en ce qu'**il présente deux lèvres (3) sensiblement parallèles.

3. Joint d'étanchéité selon la revendication 2, **caractérisé en ce que** les deux lèvres (3) sont orientées l'une par rapport à l'autre selon un V.

4. Joint d'étanchéité selon l'une des revendications 1 à 3, **caractérisé en ce que** la partie cylindrique (2) intègre un méplat (4) sur sa surface extérieure.

5. Joint d'étanchéité selon la revendication 4, **caractérisé en ce que** le méplat (4) est diamétralement opposé à au moins l'une des lèvres (3).

6. Joint d'étanchéité selon la revendication 4 ou 5, **caractérisé en ce que** la nervure (6) longitudinale est adossée au méplat (4).

7. Joint d'étanchéité selon l'une des revendications 4 à 6, **caractérisé en ce que** le méplat (4) est prolongé par une semelle de fixation (5).

8. Joint d'étanchéité selon l'une des revendications 1 à 7, **caractérisé en ce qu'**il est réalisé dans une matière élastique de type silicone armé de fibres de verre ou d'aramide.

## Patentansprüche

1. Dichtung, die gestaltet ist, um zwischen eine Abdeckhaube (51) eines rückwärtigen Teilabschnitts (50) einer Gondel und einem Turbotriebwerk (30) einer Antriebseinheit eines Luftfahrzeugs eingesetzt zu werden, wobei die besagte Dichtung (1) einen zylindrischen Abschnitt (2) und zumindest eine Lippe (3) aufweist, die sich radial aus einer Mantellinie des zylindrischen Abschnitts (2) heraus erstreckt, **dadurch gekennzeichnet, dass** die Dichtung (1) eine längs verlaufende Rippe (6) enthält, die radial ins Innere des zylindrischen Abschnitts (2) orientiert ist, und dadurch, dass sie ein Verhältnis maximaler Raumbedarf / Materialstärke von über 10 besitzt.

2. Dichtung nach Anspruch 1, **dadurch gekennzeichnet, dass** sie zwei im Wesentlichen parallel verlaufende Lippen (3) aufweist.

3. Dichtung nach Anspruch 2, **dadurch gekennzeichnet, dass** die beiden Lippen (3) gemäß einem V zueinander orientiert sind.

4. Dichtung nach einem der Ansprüche 1 bis 3, **dadurch gekennzeichnet, dass** der zylindrische Abschnitt (2) eine Abflachung (4) an seiner Außenfläche integriert.

5. Dichtung nach Anspruch 4, **dadurch gekennzeichnet, dass** die Abflachung (4) diametral gegenüber zumindest einer der Lippen (3) liegt.

6. Dichtung nach Anspruch 4 oder 5, **dadurch gekennzeichnet, dass** die längs verlaufende Rippe (6) an der Abflachung (4) anliegt.

7. Dichtung nach einem der Ansprüche 4 bis 6, **dadurch gekennzeichnet, dass** die Abflachung (4) durch einen Befestigungsflansch (5) verlängert wird.

8. Dichtung nach einem der Ansprüche 1 bis 7, **dadurch gekennzeichnet, dass** sie aus einem elastischen Material vom Typ eines glasfaser- oder aramidverstärkten Silikons ist.

## Claims

1. A sealing gasket designed to be interposed between a cowl (51) of a rear section (50) of a nacelle and a turbojet engine (30) of a propulsion assembly of an aircraft, said sealing gasket (1) having a cylindrical portion (2) and at least one lip (3) radially extending from a generatrix of the cylindrical portion (2), **characterized in that** the sealing gasket (1) incorporates a longitudinal rib (6) radially oriented inwardly of the cylindrical portion (2) and **in that** it has a maximum overall dimension/material thickness ratio greater than 10.

2. The sealing gasket according to claim 1, **characterized in that** it has two substantially parallel lips (3).

3. The sealing gasket according to claim 2, **characterized in that** the two lips (3) are oriented relative to each other according to a V-shape.

4. The sealing gasket according to any of claims 1 to 3, **characterized in that** the cylindrical portion (2) incorporates a flat (4) on its outer surface.

5. The sealing gasket according to claim 4, **characterized in that** the flat (4) is diametrically opposite to at least one of the lips (3).

6. The sealing gasket according to claim 4 or 5, **characterized in that** the longitudinal rib (6) is leaned against the flat (4).

7. The sealing gasket according any of claims 4 to 6, **characterized in that** the flat (4) is extended by a fastening plate (5).

8. The sealing gasket according to any of claims 1 to 7, **characterized in that** it is made of an elastic material of the glass or aramid fiber reinforced silicone type.
